# EUROPEAN PATENT APPLICATION

(11) **EP 4 804 040 A1**
(43) Date of publication of application: **09.09.2026**
(21) Application number: 26162876.2
(22) Date of filing: 06.03.2026
(51) Int. Cl.: G06F 12/0868

(54) **CHIP, CHIP-BASED DATA ACCESS METHOD, STORAGE MEDIUM,AND ELECTRONIC DEVICE**

(30) Priority: 07.03.2025 CN 202510272763
(71) Applicant: Chengdu Horizon Journey Technology Co., Ltd., Chengdu, Sichuan 610041 (CN)
(72) Inventor: HE, Shi, Chengdu, 610041 (CN)
(74) Representative: V.O.

(57) **Abstract**

Disclosed are a chip, a chip-based data access method, a storage medium, and an electronic device. The chip includes: a first chip domain and a second chip domain, where a functional safety level of the first chip domain is higher than that of the second chip domain, and the first chip domain is configured to generate a data access request for the second chip domain; and an isolation circuit, configured to perform a memory access operation on a storage space of the second chip domain based on the data access request, and return a request execution result of the data access request to the first chip domain based on an actual feedback status of the second chip domain for the memory access operation, so that the storage space of the second chip domain is used as an extended storage space of the first chip domain.

## Description

### FIELD OF THE INVENTION

The present disclosure relates to driving technologies, and in particular, to a chip, a chip-based data access method, a storage medium, and an electronic device.

### BACKGROUND OF THE INVENTION

In the field of driving technologies, chips are widely applied. For example, the chip may be an intelligent driving chip, and there may be several chip domains in the chip.

It should be noted that a program cannot run smoothly in the chip domain if a storage space of the chip domain is too small, and additional area overhead may be brought in if the storage space of the chip domain is too large. How to consider both smoothness of program running and the area overhead of the chip is a technical problem worthy of attention for a person skilled in the art.

### SUMMARY OF THE INVENTION

To resolve the foregoing technical problem, the present disclosure provides a chip, a chip-based data access method, a storage medium, and an electronic device.

According to an aspect of an embodiment of the present disclosure, a chip is provided, including:
a first chip domain and a second chip domain, wherein a functional safety level of the first chip domain is higher than that of the second chip domain, and the first chip domain is configured to generate a data access request for the second chip domain; and
an isolation circuit, wherein the isolation circuit is configured to perform a memory access operation on a storage space of the second chip domain based on the data access request, and return a request execution result of the data access request to the first chip domain based on an actual feedback status of the second chip domain for the memory access operation, so that the storage space of the second chip domain is used as an extended storage space of the first chip domain.

According to another aspect of an embodiment of the present disclosure, a chip-based data access method is provided, wherein the chip includes a first chip domain, a second chip domain, and an isolation circuit, and a functional safety level of the first chip domain is higher than that of the second chip domain; and
the data access method includes:
generating a data access request for the second chip domain through the first chip domain; and
performing the following operations by the isolation circuit, so that a storage space of the second chip domain is used as an extended storage space of the first chip domain: performing a memory access operation on the storage space of the second chip domain based on the data access request, and returning a request execution result of the data access request to the first chip domain based on an actual feedback status of the second chip domain for the memory access operation.

According to still another aspect of an embodiment of the present disclosure, a computer readable storage medium is provided. The storage medium stores a computer program, and the computer program is used for implementing the chip-based data access method described above.

According to yet another aspect of an embodiment of the present disclosure, an electronic device is provided, where the electronic device includes:
a processor; and
a memory, configured to store processor-executable instructions, wherein
the processor is configured to read the executable instructions from the memory, and execute the instructions to implement the chip-based data access method described above.

According to a further aspect of an embodiment of the present disclosure, a computer program product is provided. When instructions in the computer program product are executed by a processor, the chip-based data access method described above is implemented.

Based on the chip, the chip-based data access method, the storage medium, the electronic device, and the computer program product that are provided in the foregoing embodiments of the present disclosure, the first chip domain may initiate, to the isolation circuit, the data access request for the second chip domain; and the isolation circuit may perform the memory access operation on the storage space of the second chip domain based on the data access request, and return the request execution result of the data access request to the first chip domain based on the actual feedback status of the second chip domain for the memory access operation, thus completing data access of the first chip domain to the second chip domain. In other words, in the embodiments of the present disclosure, the first chip domain with a high functional safety level may perform data access on the storage space of the second chip domain with a low functional safety level via the isolation circuit. In this case, the first chip domain with a high functional safety level can flexibly use the storage space of the second chip domain with a low functional safety level, so that the storage space of the second chip domain with a low functional safety level can be used as the extended storage space of the first chip domain with a high functional safety level. In this way, the storage space of the first chip domain with a high functional safety level can be expanded without bringing in additional area overhead for the chip, so that a program can run smoothly in the first chip domain with a high functional safety level, being beneficial to considering both smoothness of program running and the area overhead of the chip. In addition, the isolation circuit can effectively isolate the first chip domain and the second chip domain, to avoid direct communication between the first chip domain and the second chip domain, thus being beneficial to preventing a functional safety exception (such as an unexpected power loss, a program runaway, or a malicious fault injection) in the second chip domain from affecting normal operation of the first chip domain.

### BRIEF DESCRIPTION OF THE DRAWINGS

FIG. 1 is a schematic diagram of a structure of a chip according to some exemplary embodiments of the present disclosure;
FIG. 2 is a schematic diagram 2 of a structure of a chip according to some exemplary embodiments of the present disclosure;
FIG. 3 is a schematic diagram 3 of a structure of a chip according to some exemplary embodiments of the present disclosure;
FIG. 4 is a schematic flowchart 1 of a chip-based data access method according to some exemplary embodiments of the present disclosure;
FIG. 5 is a schematic flowchart 2 of a chip-based data access method according to some exemplary embodiments of the present disclosure;
FIG. 6 is a schematic flowchart 3 of a chip-based data access method according to some exemplary embodiments of the present disclosure;
FIG. 7 is a schematic flowchart 4 of a chip-based data access method according to some exemplary embodiments of the present disclosure;
FIG. 8 is a schematic flowchart 5 of a chip-based data access method according to some exemplary embodiments of the present disclosure;
FIG. 9 is a schematic flowchart 6 of a chip-based data access method according to some exemplary embodiments of the present disclosure;
FIG. 10 is a schematic flowchart 7 of a chip-based data access method according to some exemplary embodiments of the present disclosure;
FIG. 11 is a schematic flowchart 8 of a chip-based data access method according to some exemplary embodiments of the present disclosure;
FIG. 12 is a schematic flowchart 9 of a chip-based data access method according to some exemplary embodiments of the present disclosure;
FIG. 13 is a schematic flowchart 10 of a chip-based data access method according to some exemplary embodiments of the present disclosure; and
FIG. 14 is a schematic diagram of a structure of an electronic device according to some exemplary embodiments of the present disclosure.

### DETAILED DESCRIPTION OF THE EMBODIMENTS

To explain the present disclosure, exemplary embodiments of the present disclosure are described below in detail with reference to accompanying drawings. Obviously, the embodiments described are merely some, rather than all of embodiments of the present disclosure. It should be understood that the present disclosure is not limited to the exemplary embodiments.

It should be noted that unless otherwise specified, the scope of the present disclosure is not limited by relative arrangement, numeric expressions, and numerical values of components and steps described in these embodiments.

### Application overview

A chip may include at least two subsystems, each of which may include a processor, a memory, a peripheral module, and the like. The processor may be, for example, a central processing unit (CPU). The memory may be, for example, a double data rate (DDR) synchronous dynamic random access memory or a static random access memory (SRAM).

It should be noted that each of the at least two subsystems may have a corresponding functional safety level. A single subsystem may serve as a chip domain, or several subsystems with a same functional safety level may form a chip domain. Therefore, there may be several chip domains in the chip.

In a process of implementing the present disclosure, the inventor finds that a program cannot run smoothly in the chip domain if a storage space of the chip domain is too small, and additional area overhead may be brought in for the chip if the storage space of the chip domain is too large. Therefore, it is necessary to take some measures to consider both smoothness of program running and the area overhead of the chip.

### Exemplary system

The automotive safety integration level (ASIL) is defined in the road vehicles-functional safety standard, involving the following five functional safety levels: quality management (QM), ASIL-A, ASIL-B, ASIL-C, and ASIL-D. A level of QM is lower than that of ASIL-A, the level of ASIL-A is lower than that of ASIL-B, the level of ASIL-B is lower than that of ASIL-C, and the level of ASIL-C is lower than that of ASIL-D.

In embodiments of the present disclosure, a chip domain with a high functional safety level may perform data access to a storage space of a chip domain with a low functional safety level, so that the storage space of the chip domain with a low functional safety level can be used as an extended storage space of the chip domain with a high functional safety level. In this way, the storage space of the chip domain with a high functional safety level can be expanded without bringing in additional area overhead for the chip, so that a program can run smoothly in the chip domain with a high functional safety level, being beneficial to considering both smoothness of program running and the area overhead of the chip.

### Exemplary circuit

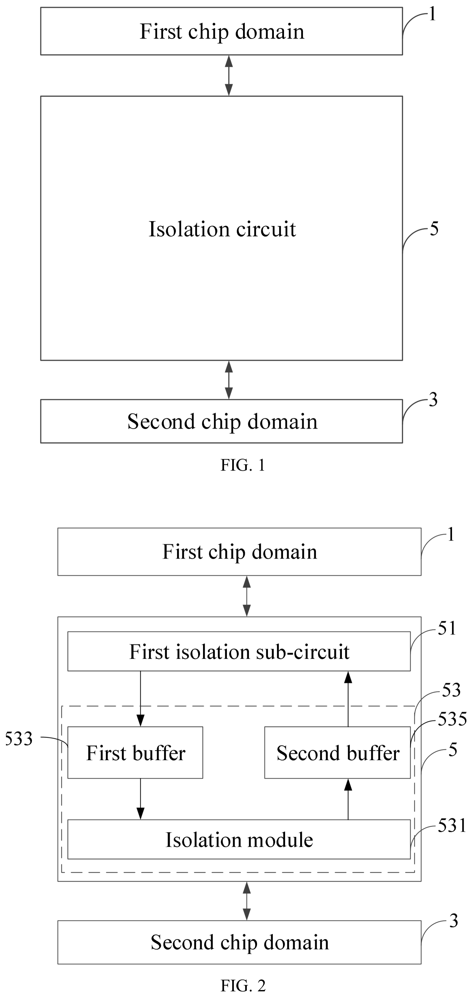

FIG. 1 is a schematic diagram of a structure of a chip according to some exemplary embodiments of the present disclosure. The chip shown in FIG. 1 may be an intelligent driving chip. The chip shown in FIG. 1 includes:
a first chip domain 1 and a second chip domain 3, wherein a functional safety level of the first chip domain 1 is higher than that of the second chip domain 3, and the first chip domain 1 is configured to generate a data access request for the second chip domain 3; and
an isolation circuit 5, wherein the isolation circuit 5 is configured to perform a memory access operation on a storage space of the second chip domain 3 based on the data access request, and return a request execution result of the data access request to the first chip domain 1 based on an actual feedback status of the second chip domain 3 for the memory access operation, so that the storage space of the second chip domain 3 is used as an extended storage space of the first chip domain 1.

Optionally, the first chip domain 1 and the second chip domain 3 may be any two chip domains with different functional safety levels in the chip (it is needed to ensure that the functional safety level of the first chip domain 1 is higher than that of the second chip domain 3). For example, the first chip domain 1 may be a chip domain with the functional safety level of ASIL-D, and the second chip domain 3 may be a chip domain with the functional safety level of ASIL-A, ASIL-B, or ASIL-C. For another example, the first chip domain 1 may be a chip domain with the functional safety level of ASIL- C, and the second chip domain 3 may be a chip domain with the functional safety level of ASIL-A or ASIL- B.

Optionally, the isolation circuit 5 may be a circuit in the chip that is configured to assist in implementing data access of the first chip domain 1 to the storage space of the second chip domain 3, and is configured to isolate the first chip domain 1 and the second chip domain 3. The isolation circuit 5 may be electrically connected to the first chip domain 1 and the second chip domain 3, respectively. The storage space of the second chip domain 3 may refer to a storage space in a memory included in the second chip domain 3. The memory included in the second chip domain 3 may be, for example, a DDR.

The first chip domain 1 may generate a data access request for the second chip domain 3, and the data access request may include, but is not limited to, a read request and a write request. The first chip domain 1 may send the data access request to the isolation circuit 5.

The isolation circuit 5 may obtain the data access request from the first chip domain 1, and perform the memory access operation on the storage space of the second chip domain 3 based on the data access request. If the data access request is a read request, the memory access operation performed by the isolation circuit 5 on the storage space of the second chip domain 3 may be a read operation, that is, reading read data corresponding to the read request (that is, data requested by the read request) from the storage space of the second chip domain 3. The read data corresponding to the read request may include, but is not limited to, feature map data and weight data. If the data access request is a write request, the memory access operation performed by the isolation circuit 5 on the storage space of the second chip domain 3 may be a write operation, that is, writing write data corresponding to the write request (that is, to-be-written data indicated by the write request) into the storage space of the second chip domain 3. The write data corresponding to the write request may include, but is not limited to, feature map data and weight data.

The isolation circuit 5 may determine the actual feedback status of the second chip domain 3 for the memory access operation. The actual feedback status may indicate whether the second chip domain 3 returns an actual memory access feedback for the memory access operation. If the memory access operation is a read operation, the actual memory access feedback may be a read feedback, which may be the read data corresponding to the read request or feedback information indicating a read failure. If the memory access operation is a write operation, the actual memory access feedback may be a write feedback, which may be feedback information indicating successful writing or feedback information indicating a write failure.

The isolation circuit 5 may also return the request execution result of the data access request to the first chip domain 1 based on the actual feedback status. If the actual feedback status indicates that the second chip domain 3 has already returned the actual memory access feedback, the isolation circuit 5 may return the actual memory access feedback as the request execution result of the data access request to the first chip domain 1. If the actual feedback status indicates that the second chip domain 3 does not return the actual memory access feedback, the isolation circuit 5 may generate a simulated memory access feedback corresponding to the data access request, and return the simulated memory access feedback as the request execution result of the data access request to the first chip domain 1. It should be noted that the simulated memory access feedback is not the actual memory access feedback returned by the second chip domain 3, but is a memory access feedback used to simulate the actual memory access feedback. If the data access request is a read request, the simulated memory access feedback may be a simulated read feedback indicating a read failure. If the data access request is a write request, the simulated memory access feedback may be a simulated write feedback indicating a write failure.

In the embodiments of the present disclosure, the first chip domain 1 may initiate, to the isolation circuit 5, the data access request for the second chip domain 3; and the isolation circuit 5 may perform the memory access operation on the storage space of the second chip domain 3 based on the data access request, and return the request execution result of the data access request to the first chip domain 1 based on the actual feedback status of the second chip domain 3 for the memory access operation, thus completing the data access of the first chip domain 1 to the second chip domain 3. In other words, in the embodiments of the present disclosure, the first chip domain 1 with a high functional safety level may perform data access on the storage space of the second chip domain 3 with a low functional safety level via the isolation circuit 5. In this case, the first chip domain 1 with a high functional safety level can flexibly use the storage space of the second chip domain 3 with a low functional safety level, so that the storage space of the second chip domain 3 with a low functional safety level can be used as the extended storage space of the first chip domain 1 with a high functional safety level. In this way, the storage space of the first chip domain 1 with a high functional safety level can be expanded without bringing in additional area overhead for the chip, so that a program can run smoothly in the first chip domain 1 with a high functional safety level, being beneficial to considering both smoothness of program running and the area overhead of the chip. In addition, the isolation circuit 5 can effectively isolate the first chip domain 1 and the second chip domain 3, to avoid direct communication between the first chip domain 1 and the second chip domain 3, thus being beneficial to preventing a functional safety exception (such as an unexpected power loss, a program runaway, or a malicious fault injection) in the second chip domain 3 from affecting normal operation of the first chip domain 1.

In some optional examples, as shown in FIG. 2, the isolation circuit 5 may include a first isolation sub-circuit 51 and a second isolation sub-circuit 53. The second isolation sub-circuit 53 may include an isolation module 531, a first buffer 533, and a second buffer 535.

That the isolation circuit 5 is configured to perform a memory access operation on a storage space of the second chip domain 3 based on the data access request, and return a request execution result of the data access request to the first chip domain 1 based on an actual feedback status of the second chip domain 3 for the memory access operation may include:
the first isolation sub-circuit 51 is configured to cache target content into the first buffer 533 based on the data access request;
the isolation module 531 is configured to perform a memory access operation on a storage region of the storage space based on the target content in the first buffer 533; and in response to obtaining an actual memory access feedback of the second chip domain 3 for the memory access operation performed on the storage region, cache the actual memory access feedback into the second buffer 535; and
the first isolation sub-circuit 51 is configured to determine, based on a cache status of the second buffer 535 for the actual memory access feedback, an actual feedback status of the second chip domain 3 for the memory access operation performed on the storage region; and return the request execution result of the data access request to the first chip domain 1 based on the actual feedback status corresponding to the storage region.

Optionally, the first isolation sub-circuit 51 may be a sub-circuit in the isolation circuit 5 that is configured to communicate with the first chip domain 1, and to detect functional safety exceptions for the first chip domain 1 and the second chip domain 3. The second isolation sub-circuit 53 may be a sub-circuit in the isolation circuit 5 that is configured to respectively communicate with the first isolation sub-circuit 51 and the second chip domain 3, and to perform read and write control on the second chip domain 3. The first buffer 533 and the second buffer 535 may be data buffers in the second isolation sub-circuit 53, for example, may be first in first out (FIFO) buffers, respectively. The isolation module 531 may be a sub-circuit in the second isolation sub-circuit 53 that is configured to respectively communicate with the second chip domain 3, the first buffer 533, and the second buffer 535, and to perform read and write control on the second chip domain 3. The isolation module 531 may be electrically connected to the second chip domain 3, the first buffer 533, and the second buffer 535, respectively. The first buffer 533 and the second buffer 535 may also be electrically connected to the first isolation sub-circuit 51, which may also be electrically connected to the first chip domain 1.

The first isolation sub-circuit 51 may obtain the data access request from the first chip domain 1, and cache the target content into the first buffer 533 based on the data access request. If the data access request is a read request, the first isolation sub-circuit 51 may use the read request as the target content and buffer the same into the first buffer 533. If the data access request is a write request, the first isolation sub-circuit 51 may obtain write data corresponding to the write request, and use the write request and the write data corresponding to the write request as the target content and buffer the same into the first buffer 533.

The isolation module 531 may perform a memory access operation on a storage region of the storage space based on the target content in the first buffer 533. If the data access request is a read request, a read address may be carried in the read request. As described in the previous paragraph, if the data access request is a read request, the read request may be used as the target content, and accordingly, the target content may include the read address. In this case, the isolation module 531 may obtain the read address from the target content, and perform a read operation on a storage region corresponding to the read address in the storage space. If the data access request is a write request, a write address may be carried in the write request. As described in the previous paragraph, if the data access request is a write request, the write request and write data corresponding to the write request may be used as the target content, and accordingly, the target content may include the write address and the write data. In this case, the isolation module 531 may obtain the write address and the write data from the target content, and perform a write operation on a storage region corresponding to the write address in the storage space, that is, write the write data into the storage region corresponding to the write address.

The isolation module 531 may also monitor whether the actual memory access feedback of the second chip domain 3 for the memory access operation performed on the storage region is obtained. If the actual memory access feedback of the second chip domain 3 for the memory access operation performed on the storage region is obtained, the isolation module 531 may cache the actual memory access feedback into the second buffer 535. If the actual memory access feedback of the second chip domain 3 for the memory access operation performed on the storage region is not obtained, the isolation module 531 would not perform the operation of caching the actual memory access feedback into the second buffer 535.

The first isolation sub-circuit 51 may determine a cache status of the second buffer 535 for the actual memory access feedback; and determine, on this basis, the actual feedback status of the second chip domain 3 for the memory access operation performed on the storage region (which may also be referred to as an actual feedback status corresponding to the storage region). The cache status of the second buffer 535 for the actual memory access feedback may indicate whether the actual memory access feedback is cached in the second buffer 535. If the actual memory access feedback is cached in the second buffer 535, the actual feedback status corresponding to the storage region may indicate that the second chip domain 3 has already returned the actual memory access feedback for the memory access operation. If the actual memory access feedback is not cached in the second buffer 535, the actual feedback status corresponding to the storage region may indicate that the second chip domain 3 does not return the actual memory access feedback for the memory access operation. Based on the actual feedback status corresponding to the storage region, the first isolation sub-circuit 51 may return the request execution result of the data access request to the first chip domain 1.

In the embodiments of the present disclosure, through collaborative work of the first isolation sub-circuit 51, the isolation module 531, the first buffer 533, and the second buffer 535, the corresponding memory access operation can be performed on the corresponding storage region of the storage space of the second chip domain 3 with a low functional safety level based on the data access request initiated by the first chip domain 1 with a high functional safety level, and the corresponding request execution result can be returned to the first chip domain 1 with a high functional safety level, so as to complete the data access of the first chip domain 1 with a high functional safety level to the storage space of the second chip domain 3 with a low functional safety level. In this way, the storage space of the second chip domain 3 with a low functional safety level may be used as the extended storage space of the first chip domain 1 with a high functional safety level. Thus, the storage space of the first chip domain 1 with a high functional safety level can be expanded without bringing in additional area overhead for the chip, so that a program can run smoothly in the first chip domain 1 with a high functional safety level, being beneficial to considering both smoothness of program running and the area overhead of the chip. In addition, the first isolation sub-circuit 51, the isolation module 531, the first buffer 533, and the second buffer 535 can effectively isolate the first chip domain 1 and the second chip domain 3, thus being beneficial to preventing the functional safety exception in the second chip domain 3 from affecting the normal operation of the first chip domain 1.

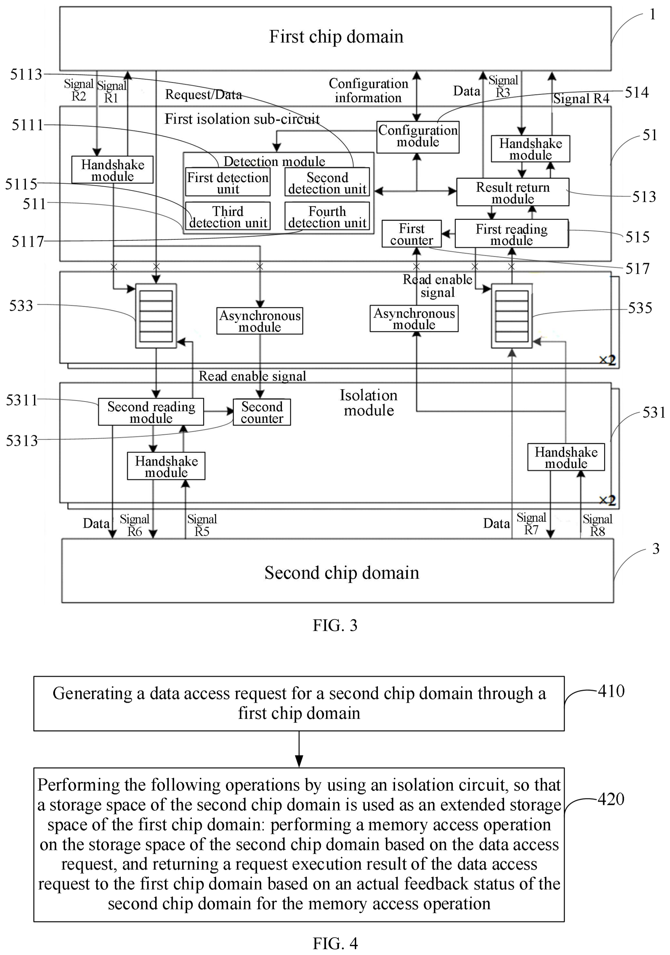

In some optional examples, as shown in FIG. 3, the first isolation sub-circuit 51 may include a detection module 511 and a result return module 513.

That the first isolation sub-circuit 51 is configured to return the request execution result of the data access request to the first chip domain 1 based on the actual feedback status corresponding to the storage region may include:
the detection module 511 is configured to determine a first functional safety detection result of the second chip domain 3 based on the actual feedback status corresponding to the storage region; and
the result return module 513 is configured to return the request execution result of the data access request to the first chip domain 1 based on the first functional safety detection result.

Optionally, the detection module 511 may be a sub-circuit in the first isolation sub-circuit 51 that is configured to detect functional safety exception for the first chip domain 1 and the second chip domain 3. The result return module 513 may be a sub-circuit in the first isolation sub-circuit 51 that is configured to return the request execution result of the data access request to the first chip domain 1. The result return module 513 may be electrically connected to the detection module 511, and may also be electrically connected to the first chip domain 1.

Optionally, the detection module 511 may determine the first functional safety detection result of the second chip domain 3 based on the actual feedback status corresponding to the storage region by using a predetermined detection strategy. The predetermined detection strategy may include, but is not limited to, a redundant backup detection strategy and a timeout detection strategy. The first functional safety detection result of the second chip domain 3 may indicate whether there is a functional safety exception in the second chip domain 3.

The redundant backup detection strategy is first described below.

When the redundant backup detection strategy is adopted, there may be at least two second isolation sub-circuits 53, such as the two shown in FIG. 3 (represented by two "×2"s in FIG. 3). If each of the at least two second isolation sub-circuits 53 includes an isolation module 531, there are a total of at least two isolation modules 531 in the at least two second isolation sub-circuits 53. In addition, if each of the at least two isolation modules 531 corresponds to one storage region (the storage region corresponding to each isolation module 531 refers to a storage region on which this isolation module 531 performs a memory access operation), the at least two isolation modules 531 may correspond to at least two storage regions, and the at least two storage regions may be in one-to-one correspondence to the at least two isolation modules 531.

Correspondingly, that the detection module 511 is configured to determine a first functional safety detection result of the second chip domain 3 based on the actual feedback status corresponding to the storage region may include:
the detection module 511 is configured to, in response to that at least two actual feedback statuses corresponding to the at least two storage regions each indicate that the second chip domain 3 has already returned the actual memory access feedback, determine a first matching degree between at least two actual memory access feedbacks corresponding to the at least two actual feedback statuses; and determine the first functional safety detection result of the second chip domain 3 based on the first matching degree.

It should be noted that for the data access request, if each of the at least two storage regions may correspond to one actual feedback status, the at least two storage regions may be in one-to-one correspondence to the at least two actual feedback statuses.

Optionally, as shown in FIG. 3, the detection module 511 may include a first detection unit 5111, which may be a detection unit in the detection module 511 that is configured to run the redundant backup detection strategy. If the at least two actual feedback statuses each indicate that the second chip domain 3 has already returned the actual memory access feedback, the first matching degree between the at least two actual memory access feedbacks in one-to-one correspondence to the at least two actual feedback statuses may be determined. For any two actual memory access feedbacks among the at least two actual memory access feedbacks, the first detection unit 5111 may determine whether the two actual memory access feedbacks are identical. If they are identical, the first detection unit 5111 may determine that the first matching degree between the two actual memory access feedbacks is 1. If they are not identical, the first detection unit 5111 may determine that the first matching degree between the two actual memory access feedbacks is 0. According to the foregoing manner, the first detection unit 5111 may obtain at least one first matching degree. The first detection unit 5111 may determine the first functional safety detection result of the second chip domain 3 based on the at least one first matching degree. For example, if the at least one first matching degree is 1, the first functional safety detection result may indicate that there is no functional safety exception in the second chip domain 3. If at least some first matching degrees among one or more first matching degrees are 0, the first functional safety detection result may indicate that there is a functional safety exception in the second chip domain 3.

It should be noted that theoretically, if the second chip domain 3 can work normally, the at least two actual memory access feedbacks in one-to-one correspondence to the at least two storage regions are consistent. In view of this, the first matching degree between the at least two actual memory access feedbacks may be determined to clarify whether the at least two actual memory access feedbacks are actually consistent. If the at least two actual memory access feedbacks are actually consistent, it indicates that an actual situation conforms to a theoretical situation. In this case, it may be determined that there is no functional safety exception in the second chip domain 3. If the at least two actual memory access feedbacks are actually inconsistent, it indicates that the actual situation does not conform to the theoretical situation. In this case, it may be determined that there is a functional safety exception in the second chip domain 3. Therefore, the first functional safety detection result of the second chip domain 3 can be efficiently and reliably determined by adopting the redundant backup detection strategy.

The timeout detection strategy is described below.

When the timeout detection strategy is adopted, the detection module 511 is further configured to start executing a timing operation in response to the first isolation sub-circuit 51 obtaining the data access request.

That the detection module 511 is configured to determine a first functional safety detection result of the second chip domain 3 based on the actual feedback status corresponding to the storage region may include:
the detection module 511 is configured to determine a second matching degree between the actual feedback status corresponding to the storage region and an expected feedback status; and determine the first functional safety detection result of the second chip domain 3 based on the second matching degree.

The expected feedback status indicates that the second chip domain 3 has already returned the actual memory access feedback before duration of the timing operation reaches preset duration.

Optionally, as shown in FIG. 3, the detection module 511 may include a second detection unit 5113, which may be a detection unit in the detection module 511 that is configured to run the timeout detection strategy, and may have a timing function. The first isolation sub-circuit 51 may further include a configuration module 514, which may configure preset duration in the second detection unit 5113. The preset duration may be maximum time that is preset based on experience and is required for the first chip domain 1 to perform a data access to the second chip domain 3 by the isolation circuit 5.

In response to the first isolation sub-circuit 51 obtaining the data access request from the first chip domain 1, the second detection unit 5113 may start executing the timing operation. The second detection unit 5113 may determine whether the second chip domain 3 has returned the actual memory access feedback before the duration of the timing operation reaches the preset duration. If the actual feedback status corresponding to the storage region indicates that the second chip domain 3 has already returned the actual memory access feedback before the duration of the timing operation reaches the preset duration, the second detection unit 5113 may determine that the second matching degree between the actual feedback status corresponding to the storage region and the expected feedback status is 1. In this case, the first functional safety detection result of the second chip domain 3 may indicate that there is no functional safety exception in the second chip domain 3. If the actual feedback status corresponding to the storage region indicates that the second chip domain 3 has not returned the actual memory access feedback before the duration of the timing operation reaches the preset duration, the second detection unit 5113 may determine that the second matching degree between the actual feedback status corresponding to the storage region and the expected feedback status is 0. In this case, the first functional safety detection result of the second chip domain 3 may indicate that there is a functional safety exception in the second chip domain 3.

It should be noted that theoretically, if can work normally, the second chip domain 3 may return the actual memory access feedback before the duration of the timing operation reaches the preset duration. In view of this, the second matching degree between the actual feedback status corresponding to the storage region and the expected feedback status may be determined, so as to clarify whether the second chip domain 3 has actually returned the actual memory access feedback before the duration of the timing operation reaches the preset duration. If the second chip domain 3 has actually returned the actual memory access feedback before the duration of the timing operation reaches the preset duration, it indicates that an actual situation conforms to a theoretical situation. In this case, it may be determined that there is no functional safety exception in the second chip domain 3. If the second chip domain 3 actually has not returned the actual memory access feedback before the duration of the timing operation reaches the preset duration, it indicates that the actual situation does not conform to the theoretical situation. In this case, it may be determined that there is a functional safety exception in the second chip domain 3. Therefore, the first functional safety detection result of the second chip domain 3 can be efficiently and reliably determined by adopting the timeout detection strategy.

Optionally, the redundant backup detection strategy and the timeout detection strategy may be used in combination. For example, if all first matching degrees are 1 and the second matching degree is 1, the first functional safety detection result may indicate that there is no functional safety exception in the second chip domain 3. If some first matching degrees among the all first matching degrees are 0 and/or the second matching degree is 0, the first functional safety detection result may indicate that there is a functional safety exception in the second chip domain 3.

Regardless of the manner for determining the first functional safety detection result of the second chip domain 3, the result return module 513 may return the request execution result of the data access request to the first chip domain 1 based on the first functional safety detection result.

In some optional implementations of the present disclosure, that the result return module 513 is configured to return the request execution result of the data access request to the first chip domain 1 based on the first functional safety detection result may include:
the result return module 513 is configured to, in response to the first functional safety detection result indicating that there is no functional safety exception in the second chip domain 3, determine a target actual memory access feedback based on the actual feedback status corresponding to the storage region, and return the target actual memory access feedback as the request execution result of the data access request to the first chip domain 1.

Taking a case where there are at least two second isolation sub-circuits 53 as an example, if the first functional safety detection result indicates that there is no functional safety exception in the second chip domain 3, it indicates that the at least two actual feedback statuses corresponding to the at least two storage regions each indicate that the second chip domain has already returned the actual memory access feedback. In this case, one actual memory access feedback may be randomly selected from the at least two actual memory access feedbacks corresponding to the at least two actual feedback statuses to serve as a target actual memory access feedback. The result return module 513 may return the target actual memory access feedback as the request execution result of the data access request to the first chip domain 1. In this way, the first chip domain 1 can obtain the actual memory access feedback of the second chip domain 3 for the memory access operation; and based on this, the first chip domain 1 may make decisions on an operation that needs to be performed subsequently. For example, if the actual memory access feedback is feedback information indicating a read failure or a write failure, the first chip domain 1 may re-initiate the data access request that is previously initiated. If the actual memory access feedback is feedback information indicating successful writing or reading, the first chip domain 1 may initiate a new data access request.

In some other optional implementations of the present disclosure, that the result return module 513 is configured to return the request execution result of the data access request to the first chip domain 1 based on the first functional safety detection result may include:
the result return module 513 is configured to, in response to the first functional safety detection result indicating that there is a functional safety exception in the second chip domain 3, generate a simulated memory access feedback corresponding to the data access request, and return the simulated memory access feedback as the request execution result of the data access request to the first chip domain 1.

Optionally, the simulated memory access feedback is not the actual memory access feedback returned by the second chip domain 3, but is a memory access feedback used to simulate the actual memory access feedback. If the data access request is a read request, the simulated memory access feedback may be a simulated read feedback indicating a read failure. If the data access request is a write request, the simulated memory access feedback may be a simulated write feedback indicating a write failure.

The first chip domain 1 can obtain the simulated memory access feedback because the simulated memory access feedback is returned as the request execution result of the data access request to the first chip domain 1 by the result return module 513. Based on this, the first chip domain 1 may make decisions on an operation that needs to be performed subsequently, for example, deciding whether to re-initiate the data access request that is previously initiated or initiate a new data access request. In this way, although the actual memory access feedback for the memory access operation is not returned by the second chip domain 3, or there is an exception in the actual memory access feedback returned by the second chip domain 3 for the memory access operation (for example, the case described above where the first matching degree is 0) due to the functional safety exception in the second chip domain 3, the result return module 513 may also independently generate a simulated memory access feedback and return the same to the first chip domain 1. This is beneficial to avoiding miss of a memory access feedback, to complete an entire data access process, thereby preventing the first chip domain 1 from remaining in a waiting status for a long time because the access memory feedback is not obtained.

In the embodiments of the present disclosure, the detection module 511 can efficiently and reliably determine, based on the actual feedback status corresponding to the storage region, whether there is a functional safety exception in the second chip domain 3. Based on this, the result return module 513 may return the corresponding request execution result to the first chip domain 1. In this way, regardless of whether there is a functional safety exception in the second chip domain 3, the entire data access process can be implemented normally.

In some optional examples, as shown in FIG. 3, the first isolation sub-circuit 51 may further include a first reading module 515 and a first counter 517.

The first counter 517 is configured to record first numbers of the actual memory access feedbacks that are respectively cached in at least two second buffers 535 in the at least two second isolation sub-circuits 53.

Before the first matching degree between the two actual memory access feedbacks corresponding to the at least two actual feedback statuses is determined by the detection module 511, the first reading module 515 is configured to perform data reading on the at least two second buffers 535 in response to determining, based on the first quantities of the actual memory access feedbacks that are respectively cached in the at least two second buffers 535, that the at least two second buffers 535 meet a preset reading condition, to obtain the two actual memory access feedbacks respectively corresponding to the at least two actual feedback statuses.

Optionally, the first counter 517 may include at least two counters, each of which is configured to record the first number of the actual memory access feedbacks cached in one of the at least two second buffers 535.

Optionally, the preset reading condition may be: the buffer is in a non-empty status (that is, there is content available for reading in the buffer).

When the redundant backup detection strategy is adopted, before the first matching degree between the two actual memory access feedbacks corresponding to the at least two actual feedback statuses is determined by the detection module 511, the first reading module 515 may determine whether the first numbers, recorded by the first counter 517, of the actual memory access feedbacks that are respectively cached in the at least two second buffers 535 are each 0. If the first numbers of the actual memory access feedbacks that are respectively cached in the at least two second buffers 535 are each not 0, it indicates that there are actual memory access feedbacks available for reading in the at least two second buffers 535, and it may be determined that the at least two second buffers 535 meet the preset reading condition. In this case, the first reading module 515 may respectively send read enable signals to the at least two second buffers 535, which may return the actual memory access feedbacks cached therein to the first reading module 515 respectively in response to the received read enable signals. In this case, the first numbers of the cached actual memory access feedbacks that are recorded by the first counter 517 can be subtracted by 1 from current values. In this way, the first reading module 515 may obtain two actual memory access feedbacks corresponding to the at least two actual feedback statuses through data reading, to determine the first matching degree. If the first numbers of the actual memory access feedbacks cached in some second buffers 535 among the at least two second buffers 535 are 0, it indicates that there is no actual memory access feedback available for reading in these second buffers 535, and it may be determined that the at least two second buffers 535 do not meet the preset reading condition and may wait for a period of time. After a period of time, if the at least two second buffers 535 meet the preset reading condition, at least two actual memory access feedbacks respectively corresponding to the at least two actual feedback statuses may be obtained by performing data reading on the at least two second buffers 535, so as to determine the first matching degree.

In the embodiments of the present disclosure, by setting of the first reading module 515 and the first counter 517, it may be monitored that there are actual memory access feedbacks available for reading in each of the at least two second buffers 535, and data reading may only be performed in this case. In this way, at least two actual memory access feedbacks can be read successfully to determine the first matching degree, being beneficial to avoiding resource consumption and power consumption caused by data reading in cases other than this case.

In some examples, the first isolation sub-circuit 51 is further configured to determine a first functional safety detection result of the second chip domain 3 based on the actual feedback status corresponding to the storage region; and perform a first target exception handling operation in response to the first functional safety detection result indicating that there is a functional safety exception in the second chip domain 3.

Optionally, for the specific manner for the first isolation sub-circuit 51 to determine the first functional safety detection result of the second chip domain 3 based on the actual feedback status corresponding to the storage region, reference may be made to the foregoing relevant description, and details are not described herein. If the first functional safety detection result indicates that there is a functional safety exception in the second chip domain 3, the first isolation sub-circuit 51 may perform the first target exception handling operation, which may be an exception handling operation for preventing the functional safety exception in the second chip domain 3 from affecting normal operation of the first chip domain 1.

In some optional implementations of the present disclosure, that the first isolation sub-circuit 51 is configured to perform a first target exception handling operation may include:
the first isolation sub-circuit 51 is configured to send a first interrupt signal to the first chip domain 1, so that the first chip domain 1 controls reset of the second chip domain 3, the isolation module 531, the first buffer 533, and the second buffer 535 in response to obtaining the first interrupt signal.

Optionally, a reset line may be disposed between the first chip domain 1 and the second chip domain 3, a reset line may be disposed between the first chip domain 1 and the isolation module 531, a reset line may be disposed between the first chip domain 1 and the first buffer 533, and a reset line may also be disposed between the first chip domain 1 and the second buffer 535. The first chip domain 1 may respectively send reset signals to the second chip domain 3, the isolation module 531, the first buffer 533, and the second buffer 535 through these reset lines, so that the second chip domain 3, the isolation module 531, the first buffer 533, and the second buffer 535 perform reset operations in response to the received reset signals. Alternatively, the first chip domain 1 may write reset instructions for the second chip domain 3, the isolation module 531, the first buffer 533, and the second buffer 535 into the configuration module 514. The first isolation sub-circuit 51 may transmit the reset instructions written in the configuration module 514 to the second chip domain 3, the isolation module 531, the first buffer 533, and the second buffer 535, so that the second chip domain 3, the isolation module 531, the first buffer 533, and the second buffer 535 perform the reset operations in response to the received reset instructions.

In this implementation, the first isolation sub-circuit 51 may send the first interrupt signal to the first chip domain 1, so that the first chip domain 1 perceives the functional safety exception in the second chip domain 3, and the first chip domain 1 controls the reset of the second chip domain 3, the isolation module 531, the first buffer 533, and the second buffer 535 in a timely manner. In this way, in an aspect, the second chip domain 3 may be restored to a normal working status, to prevent the functional safety exception in the second chip domain 3 from affecting the normal operation of the first chip domain 1. In another aspect, data cached in the second isolation sub-circuit 53 (such as the target content cached in the first buffer 533, an actual memory access feedback cached in the second buffer 535, and a second number recorded in the second counter 5313 described below) may be cleared to prevent these data from affecting subsequent data access.

In some other optional implementations of the present disclosure, that the first isolation sub-circuit 51 is configured to perform a first target exception handling operation includes:
the first isolation sub-circuit 51 is configured to disconnect a communication link between the first isolation sub-circuit 51 and the first buffer 533, and disconnect a communication link between the first isolation sub-circuit 51 and the second buffer 535.

Optionally, the communication link between the first isolation sub-circuit 51 and the first buffer 533 may refer to a bus connecting the first isolation sub-circuit 51 and the first buffer 533. By setting the bus in a disconnected status, the communication link between the first isolation sub-circuit 51 and the first buffer 533 may be disconnected. A manner for disconnecting the communication link between the first isolation sub-circuit 51 and the second buffer 535 is similar, and details are not described herein. In specific implementation, all positions individually marked with a symbol "X" between the first isolation sub-circuit 51 and the second isolation sub-circuit 53 in FIG. 3 may be set in a disconnected status.

In the embodiments of the present disclosure, disconnecting the communication link between the first isolation sub-circuit 51 and the first buffer 533 and disconnecting the communication link between the first isolation sub-circuit 51 and the second buffer 535 are beneficial to disconnecting the communication link between the first chip domain 1 and the second chip domain 3, thereby preventing the functional safety exception in the second chip domain 3 from affecting the normal operation of the first chip domain 1.

In some optional examples, as shown in FIG. 3, the isolation module 531 may include a second reading module 5311 and a second counter 5313.

The second counter 5313 is configured to record a second number of the target content cached in the first buffer 533.

Before the memory access operation is performed by the isolation module 531 on a storage region of the storage space based on the target content in the first buffer 533, the second reading module 5311 is configured to perform data reading on the first buffer 533 in response to determining, based on the second number of the target content cached in the first buffer 533, that the first buffer 533 meets a preset reading condition, to obtain the target content in the first buffer 533.

Optionally, the preset reading condition may be: the buffer is in a non-empty status (that is, there is content available for reading in the buffer).

Before the memory access operation is performed by the isolation module 531 on a storage region of the storage space based on the target content in the first buffer 533, the second reading module 5311 may determine whether the second number of the target content cached in the first buffer 533 that is recorded by the second counter 5313 is 0. If the second number of the target content cached in the first buffer 533 is not 0, it indicates that there is target content available for reading in the first buffer 533, and it may be determined that the first buffer 533 meets the preset reading condition. In this case, the second reading module 5311 may send a read enable signal to the first buffer 533, which may return the target content cached therein to the second reading module 5311 in response to the received read enable signal. In this way, the second reading module 5311 may obtain the target content by data reading, for subsequent memory access operations. If the second number of the target content cached in the first buffer 533 is 0, it indicates that there is no target content available for reading in the first buffer 533, and it may be determined that the first buffer 533 does not meet the preset reading condition and may wait for a period of time. After a period of time, if the first buffer 533 meets the preset reading condition, the target content in the first buffer 533 may be obtained by the data reading performed on the first buffer 533, for subsequent memory access operations.

In the embodiments of the present disclosure, by setting of the second reading module 5311 and the second counter 5313, it may be monitored that there is target content available for reading in the first buffers 533, and data reading may only be performed in this case. In this way, the target content can be read successfully for subsequent memory access operations, being beneficial to avoiding resource consumption and power consumption caused by data reading in cases other than this case.

In some optional examples, the isolation circuit 5 is further configured to perform a first target exception handling operation in response to obtaining an actual memory access feedback from the second chip domain 3 and the actual memory access feedback and the data access request meeting a preset uncorrelated condition.

Optionally, that the actual memory access feedback and the data access request meet the preset uncorrelated condition may be understood as: the actual memory access feedback is not returned by the second chip domain 3 for a memory access operation corresponding to the data access request, but is initiated spontaneously by the second chip domain 3. The preset uncorrelated condition may be: having different carrying statuses for a request ID. For example, if a carrying status of the data access request for the request ID is: the request ID is carried and the specific carried request ID is ID1, while a carrying status of the actual memory access feedback for the request ID is: the request ID is not carried, or the request ID is carried and the carried request ID is ID2 (which is different from an ID1 carried in any data access request), it may be determined that the actual memory access feedback and the data access request meet the preset uncorrelated condition.

Optionally, as shown in FIG. 3, the detection module 511 may include a third detection unit 5115, which may be a detection unit in the detection module 511 that is configured to perform determining related to the preset uncorrelated condition. If the isolation circuit 5 obtains the actual memory access feedback from the second chip domain 3, and the third detection unit 5115 determines that the actual memory access feedback and the data access request meet the preset uncorrelated condition, it indicates that the first chip domain 1 does not initiate a data access request, but the second chip domain 3 provides a feedback. This is obviously abnormal. Therefore, the third detection unit 5115 may determine that there is a functional safety exception in the second chip domain 3. In this case, the third detection unit 5115 may perform the first target exception handling operation. For a type of the first target exception handling operation, reference may be made to the foregoing relevant description, and details are not described herein. In this way, it is beneficial to restoring the second chip domain 3 to a normal working status, to prevent the functional safety exception in the second chip domain 3 from affecting the normal operation of the first chip domain 1; is beneficial to clearing the data cached in the second isolation sub-circuit 53, to prevent these data from affecting subsequent data access; and is also beneficial to disconnecting the communication link between the first chip domain 1 and the second chip domain 3, to further prevent the functional safety exception in the second chip domain 3 from affecting the normal operation of the first chip domain 1.

In some optional examples, the isolation circuit 5 is further configured to record a third number of data access requests in execution; determine a numerical relationship between the third number of the data access requests in execution and a preset number; determine a second functional safety detection result of the first chip domain 1 based on the numerical relationship; and perform a second target exception handling operation in response to the second functional safety detection result indicating that there is a functional safety exception in the first chip domain 1.

Optionally, as shown in FIG. 3, the detection module 511 may include a fourth detection unit 5117, which may be a detection unit in the detection module 511 that is configured to detect a functional safety exception for the first chip domain 1. The fourth detection unit 5117 may record a number (that is, the third number) of data access requests actually in execution. The data access request in execution may be understood as a data access request initiated by the first chip domain 1 to the isolation circuit 5, but for which the first chip domain 1 has not yet received the request execution result from the isolation circuit 5. In addition, the configuration module 514 may configure the preset number in the fourth detection unit 5117, and the preset number may be a maximum number of data access requests in execution that are supported by the isolation circuit 5. The fourth detection unit 5117 may also determine the numerical relationship between the third number of the data access requests in execution and the preset number. The numerical relationship between the third number of the data access requests in execution and the preset number may be a magnitude relationship between the third number of the data access requests in execution and the preset number. If the numerical relationship between the third number of the data access requests in execution and the preset number indicates that the third number of the data access requests in execution is greater than the preset number, it indicates that the number of the data access requests actually in execution exceeds the maximum number supported by the isolation circuit 5. This is obviously abnormal. Therefore, the second functional safety detection result may indicate that there is a functional safety exception in the first chip domain 1. If the numerical relationship between the third number of the data access requests in execution and the preset number indicates that the third number of the data access requests in execution is less than or equal to the preset number, it indicates that the number of the data access requests actually in execution does not exceed the maximum number supported by the isolation circuit 5. Therefore, the second functional safety detection result may indicate that there is no functional safety exception in the first chip domain 1. If the second functional safety detection result indicates that there is a functional safety exception in the first chip domain 1, the fourth detection unit 5117 may perform the second target exception handling operation, which may be a repair operation for the functional safety exception in the first chip domain 1.

In some optional implementations of the present disclosure, that the isolation circuit 5 is configured to perform a second target exception handling operation may include:
the isolation circuit 5 is configured to send a second interrupt signal to the first chip domain 1, so that the first chip domain 1 performs a reset operation in response to obtaining the second interrupt signal.

If the second functional safety detection result indicates that there is a functional safety exception in the first chip domain 1, the fourth detection unit 5117 may send the second interrupt signal to the first chip domain 1, so that the first chip domain 1 can perceive its own functional safety exception through the second interrupt signal, and restore itself to a normal working status in a timely manner through the reset operation.

Certainly, a type of the second target exception handling operation is not limited thereto, and other operations that can help restore the first chip domain 1 to the normal working status are all feasible. For example, the isolation circuit 5 may send an alarm signal to prompt manual exception repair for the first chip domain 1.

In some optional examples, the first chip domain 1 may be a chip domain with the functional safety level of ASIL-D, and the second chip domain 3 may be a chip domain with the functional safety level of ASIL-A, ASIL-B, or ASIL-C. In this case, the first chip domain 1 may also be referred to as an ASIL-D domain, and the second chip domain 3 may also be referred to as an other domain. In addition, the isolation circuit 5 may be referred to as a bdiso_dp IP, the first isolation sub-circuit 51 may be referred to as bdiso_dp_s, a sub-circuit composed of two asynchronous modules in the first buffer 533, the second buffer 535, and the second isolation sub-circuit 53 (as shown in FIG. 3, the asynchronous modules may be configured to implement cross-clock-domain asynchronous) may be referred to as bdiso_dp_async, and the isolation module 531 may be referred to as bdiso_dp_m. There may be two second isolation sub-circuits 53.

If needing to perform writing on the other domain, the ASIL-D domain may initiate a write request and write data to the isolation circuit 5 through a bus. After receiving the write request and the write data, the bdiso_dp_s stores the two into two first buffers 533 in the two second isolation sub-circuits 53. In this case, the first detection unit 5111 starts timing, and the fourth detection unit 5117 start counting. The bdiso_dp_m performs reading on the two first buffers 533 separately, and sends read data (including the write request and the write data) to two different storage regions of a DDR in the other domain for storage. After receiving a write feedback from the other domain, the bdiso_dp_m stores the same into two second buffers 535 in the two second isolation sub-circuits 53, respectively. When finding that both the two second buffers 535 are not empty, the first reading module 515 in the bdiso_dp_s respectively performs reading on the two second buffers 535, and compares two reading results (equivalent to determining the first matching degree described above). If the comparison passes (for example, the first matching degree is 1), data (which is specifically the request execution result) is returned to the ASIL-D domain, otherwise an interrupt is reported. If no feedback is received within specified duration, it is determined that the other domain is hung.

If needing to perform reading on the other domain, the ASIL-D domain may initiate a read request to the isolation circuit 5 through a bus. After receiving the read request, the bdiso_dp_s stores the same into two first buffers 533 in the two second isolation sub-circuits 53. In this case, the first detection unit 5111 starts timing, and the fourth detection unit 5117 start counting. The bdiso_dp_m performs reading on the two first buffers 533 separately, and sends read data (including the read request) to the other domain. After receiving two read feedbacks from the DDR in the other domain, the bdiso_dp_m stores the same into two second buffers 535 in the two second isolation sub-circuits 53, respectively. When finding that both the two second buffers 535 are not empty, the first reading module 515 in the bdiso_dp_s respectively performs reading on the two second buffers 535, and compares two reading results (equivalent to determining the first matching degree described above). If the comparison passes (for example, the first matching degree is 1), data (that is, the request execution result) is returned to the ASIL-D domain, otherwise an interrupt is reported. If no feedback is received within specified duration, it is considered that the other domain is hung.

Optionally, the bdiso_dp IP may report an interrupt in the following scenarios: a. a number of outstanding commands sent by the ASIL-D domain exceeds a set value (equivalent to the third number of the data access requests in execution being greater than the preset number that is described above); b. the other domain does not provide a feedback within specified duration (equivalent to the second chip domain 3 not returning the actual memory access feedback before the duration of the timing operation reaches the preset duration that is described above); c. the comparison about the read data or the write feedback provided by the other domain is not passed (equivalent to the at least two actual memory access feedbacks being inconsistent that is described above); and d. the ASIL-D domain does not send a command, but the other domain provides a feedback (equivalent to the actual memory access feedback and the data access request meeting the preset uncorrelated condition that is described above).

Optionally, when a CPU in the ASIL-D domain receives the interrupt reported by the bdiso_dp IP, software intervention may be used to reset the other domain or to perform other operations that can restore the other domain to the normal working status. Meanwhile, the bdiso_dp_async and the bdiso_dp_m may also be reset to clear the data cached in the bdiso_dp IP.

Optionally, as shown in FIG. 3, the first isolation sub-circuit 51 may further include some handshake modules for handshake communication between the first isolation sub-circuit 51 and the first chip domain 1. Based on the handshake communication between the first isolation sub-circuit 51 and the first chip domain 1, the first isolation sub-circuit 51 may send a signal R1 to the first chip domain 1, wherein the signal R1 may indicate whether new target content can be written into the first buffer 533. The first chip domain 1 may return a signal R2 to the first isolation sub-circuit 51, wherein the signal R2 may indicate that the signal R1 is received. Based on the handshake communication between the first isolation sub-circuit 51 and the first chip domain 1, the first chip domain 1 may send a signal R3 to the first isolation sub-circuit 51, wherein the signal R3 may indicate whether the first chip domain 1 can receive a new request execution result. The first isolation sub-circuit 51 may return a signal R4 to the first chip domain 1, where the signal R4 may indicate that the signal R3 is received.

Similarly, as shown in FIG. 3, the isolation module 531 may further include some handshake modules for handshake communication between the isolation module 531 and the second chip domain 3. Based on the handshake communication between the isolation module 531 and the second chip domain 3, the second chip domain 3 may send a signal R5 to the isolation module 531, wherein the signal R5 may indicate whether the second chip domain 3 can support a new memory access operation. The isolation module 531 may return a signal R6 to the second chip domain 3 in response to receiving the signal R5, wherein the signal R6 may indicate that the signal R5 is received. Based on the handshake communication between the isolation module 531 and the second chip domain 3, the isolation module 531 may send a signal R7 to the second chip domain 3, wherein the signal R7 may indicate whether a new actual memory access feedback is written into the second buffer 535. The second chip domain 3 may return a signal R8 to the isolation module 531 in response to receiving the signal R7, where the signal R8 may indicate that the signal R7 is received.

In view of the above, by adopting the embodiments of the present disclosure, the storage space of the chip domain with a low functional safety level may be used as the extended storage space of the chip domain with a high functional safety level, providing high flexibility. This is beneficial to expanding the storage space of the chip domain with a high functional safety level without bringing in additional area overhead for the chip, so that a program can run smoothly in the chip domain with a high functional safety level, thereby saving costs. This is especially suitable for scenarios where a memory size of the chip domain with a high functional safety level is limited. In addition, when having a functional safety exception, the chip domain with a low functional safety level can be effectively isolated by the bdiso_dp IP, thereby ensuring normal and reliable operation of the chip domain with a high functional safety level. Moreover, the chip domain with a high functional safety level can perceive the functional safety exception in the chip domain with a low functional safety level.

### Exemplary method

FIG. 4 is a schematic flowchart of a chip-based data access method according to some exemplary embodiments of the present disclosure. In the method shown in FIG. 4, the chip includes a first chip domain, a second chip domain, and an isolation circuit. A functional safety level of the first chip domain is higher than that of the second chip domain. The method shown in FIG. 4 includes:
step 410: generating a data access request for the second chip domain through the first chip domain; and
step 420: performing the following operations by the isolation circuit, so that a storage space of the second chip domain is used as an extended storage space of the first chip domain: performing a memory access operation on the storage space of the second chip domain based on the data access request, and returning a request execution result of the data access request to the first chip domain based on an actual feedback status of the second chip domain for the memory access operation.

In some optional examples, the isolation circuit includes a second isolation sub-circuit, which includes a first buffer and a second buffer.

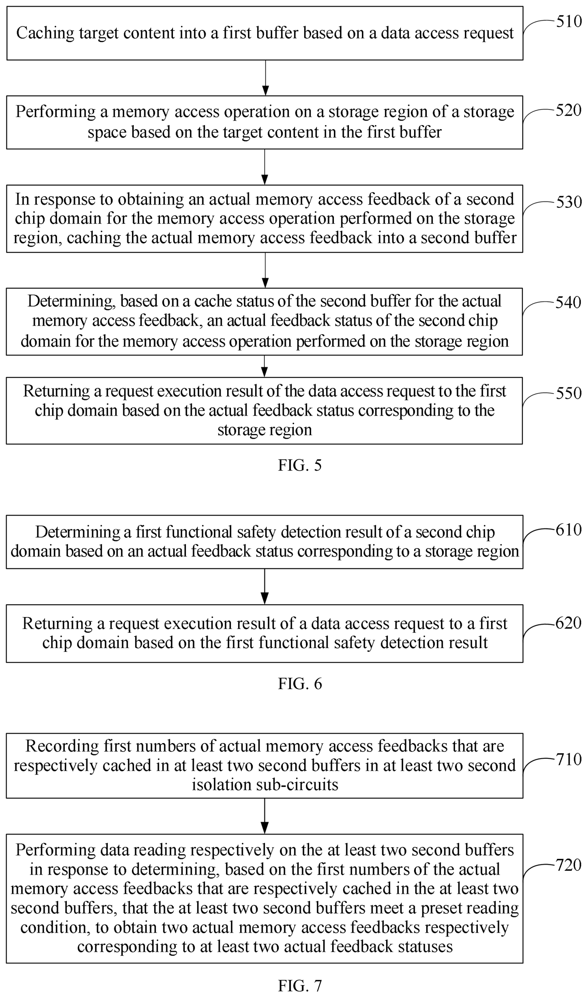

As shown in FIG. 5, the performing a memory access operation on the storage space of the second chip domain based on the data access request, and returning a request execution result of the data access request to the first chip domain based on an actual feedback status of the second chip domain for the memory access operation may include:
step 510: caching target content into the first buffer based on the data access request;
step 520: performing a memory access operation on a storage region of the storage space based on the target content in the first buffer;
step 530: in response to obtaining an actual memory access feedback of the second chip domain for the memory access operation performed on the storage region, caching the actual memory access feedback into the second buffer;
step 540: determining, based on a cache status of the second buffer for the actual memory access feedback, an actual feedback status of the second chip domain for the memory access operation performed on the storage region; and
step 550: returning the request execution result of the data access request to the first chip domain based on the actual feedback status corresponding to the storage region.

In some optional examples, as shown in FIG. 6, step 550 includes:
step 610: determining a first functional safety detection result of the second chip domain based on the actual feedback status corresponding to the storage region; and
step 620: returning the request execution result of the data access request to the first chip domain based on the first functional safety detection result.

In some optional examples, there are at least two second isolation sub-circuits, which correspond to at least two storage regions.

Step 610 includes:
in response to that at least two actual feedback statuses corresponding to the at least two storage regions each indicate that the second chip domain has already returned the actual memory access feedback, determining a first matching degree between at least two actual memory access feedbacks corresponding to the at least two actual feedback statuses; and
determining the first functional safety detection result of the second chip domain based on the first matching degree.

In some optional examples, as shown in FIG. 7, the method provided in the embodiments of the present disclosure may further include:
step 710: recording first numbers of the actual memory access feedbacks that are respectively cached in at least two second buffers in the at least two second isolation sub-circuits; and
step 720: performing data reading on the at least two second buffers in response to determining, based on the first numbers of the actual memory access feedbacks that are respectively cached in the at least two second buffers, that the at least two second buffers each meet a preset reading condition, to obtain the two actual memory access feedbacks respectively corresponding to the at least two actual feedback statuses.

Optionally, step 720 may be performed before step 610.

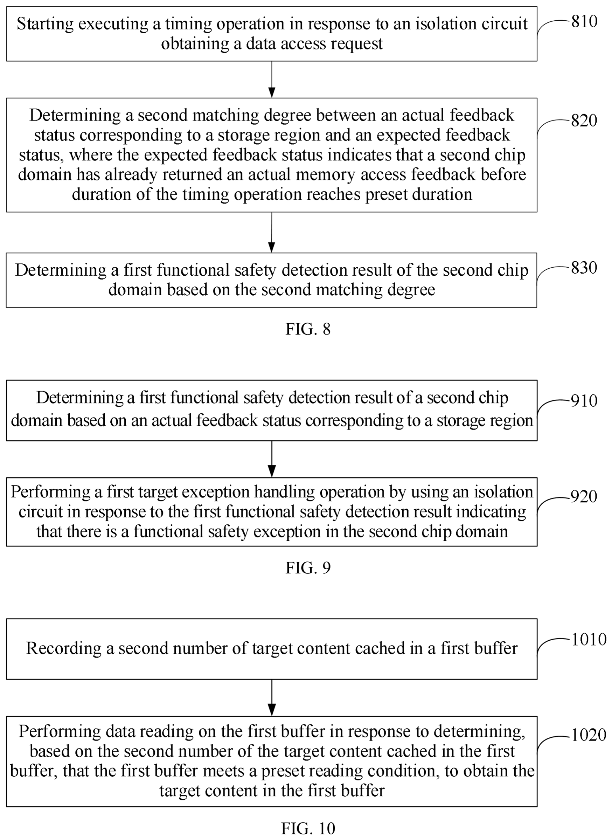

In some optional examples, as shown in FIG. 8, the method provided in the embodiments of the present disclosure may further include:
step 810: starting executing a timing operation in response to the isolation circuit obtaining the data access request.

Step 610 includes:
step 820: determining a second matching degree between the actual feedback status corresponding to the storage region and an expected feedback status, wherein the expected feedback status indicates that the second chip domain has already returned the actual memory access feedback before duration of the timing operation reaches preset duration.
step 830: determining the first functional safety detection result of the second chip domain based on the second matching degree.

In some optional examples, step 620 includes:
in response to the first functional safety detection result indicating that there is no functional safety exception in the second chip domain, determining a target actual memory access feedback based on the actual feedback status corresponding to the storage region, and returning the target actual memory access feedback as the request execution result of the data access request to the first chip domain;
   or
the result return module is configured to, in response to the first functional safety detection result indicating that there is a functional safety exception in the second chip domain, generate a simulated memory access feedback corresponding to the data access request, and return the simulated memory access feedback as the request execution result of the data access request to the first chip domain.

In some optional examples, as shown in FIG. 9, the method provided in the embodiments of the present disclosure may further include:
step 910: determining a first functional safety detection result of the second chip domain based on the actual feedback status corresponding to the storage region; and
step 920: performing a first target exception handling operation by the isolation circuit in response to the first functional safety detection result indicating that there is a functional safety exception in the second chip domain.

In some optional examples, the performing a first target exception handling operation by the isolation circuit includes:
sending a first interrupt signal to the first chip domain by the isolation circuit, so that the first chip domain controls reset of the second chip domain, and an isolation module, the first buffer, and the second buffer in the second isolation sub-circuit in response to obtaining the first interrupt signal;
   and/or
disconnecting a communication link between a first isolation sub-circuit in the isolation circuit and the first buffer, and disconnecting a communication link between the first isolation sub-circuit and the second buffer.

In some optional examples, as shown in FIG. 10, the method provided in the embodiments of the present disclosure may further include:
step 1010: recording a second number of the target content cached in the first buffer; and
step 1020: performing data reading on the first buffer in response to determining, based on the second number of the target content cached in the first buffer, that the first buffer meets a preset reading condition, to obtain the target content in the first buffer.

Optionally, step 1020 may be performed before step 520.

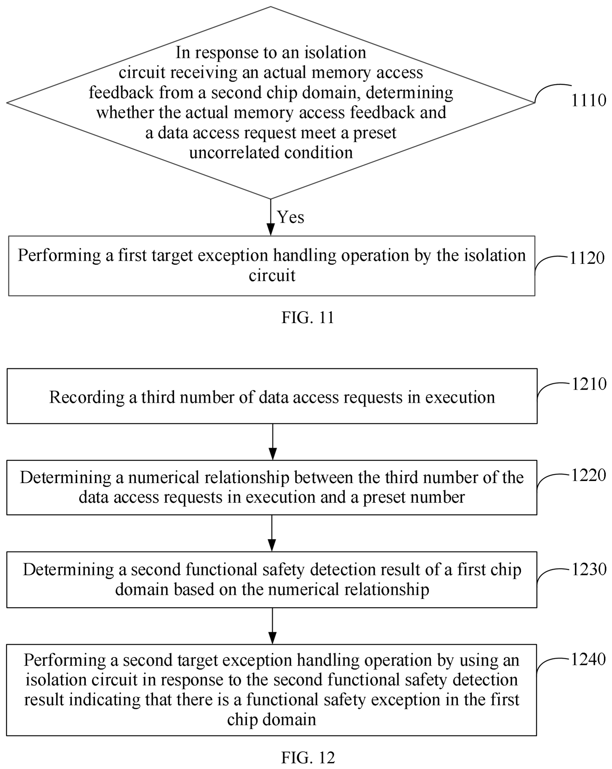

In some optional examples, as shown in FIG. 11, the method provided in the embodiments of the present disclosure may further include:
step 1110: in response to the isolation circuit receiving an actual memory access feedback from the second chip domain, determining whether the actual memory access feedback and the data access request meet a preset uncorrelated condition; and proceeding to step 1120 in response to the actual memory access feedback and the data access request meeting the preset uncorrelated condition; and
step 1120: performing the first target exception handling operation by the isolation circuit.

In some optional examples, as shown in FIG. 12, the method provided in the embodiments of the present disclosure may further include:
step 1210: recording a third number of data access requests in execution;
step 1220: determining a numerical relationship between the third number of the data access requests in execution and a preset number;
step 1230: determining a second functional safety detection result of the first chip domain based on the numerical relationship; and
step 1240: performing a second target exception handling operation by the isolation circuit in response to the second functional safety detection result indicating that there is a functional safety exception in the first chip domain.

In some optional examples, the performing a second target exception handling operation by the isolation circuit includes:
sending a second interrupt signal to the first chip domain by the isolation circuit, so that the first chip domain performs a reset operation in response to obtaining the second interrupt signal.

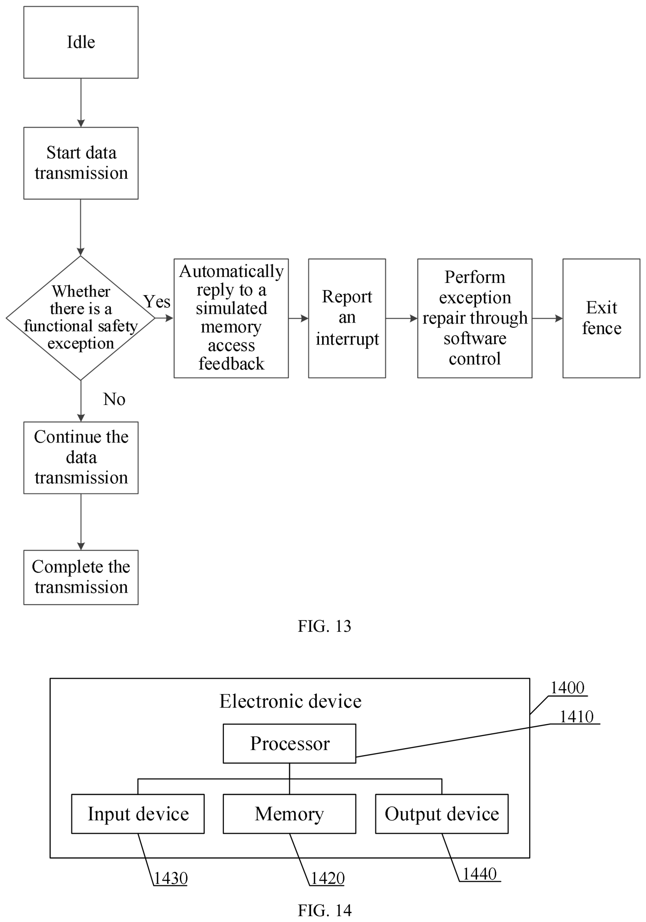

In some optional examples, as shown in FIG. 13, the first chip domain may initiate a data access request to the isolation circuit when the isolation circuit is in an idle status (that is, the isolation circuit has no memory access task in execution or to be executed), to start data transmission between the first chip domain and the isolation circuit. The isolation circuit may detect whether there is a functional safety exception in the second chip domain. If there is a functional safety exception in the second chip domain, the isolation circuit may generate a simulated memory access feedback corresponding to the data access request, and return the simulated memory access feedback as the request execution result of the data access request to the first chip domain. In addition, the isolation circuit may also report an interrupt to the first chip domain. In this case, a CPU in the first chip domain may perform exception repair on the second chip domain (such as controlling reset of the second chip domain) through software control. Moreover, all positions individually marked with a symbol "X" between the first isolation sub-circuit 51 and the second isolation sub-circuit 53 in FIG. 3 may be set in a disconnected status (in this case, the isolation circuit may be considered to be in a fence status). After the functional safety exception in the second chip domain is successfully resolved, the isolation circuit may exit the fence status. In other words, all the positions individually marked with the symbol "X" between the first isolation sub-circuit 51 and the second isolation sub-circuit 53 in FIG. 3 may be restored to a conductive status.

In the method in the present disclosure, various optional embodiments, optional implementations, and optional examples in the section of exemplary circuit described above may be flexibly selected and combined according to requirements, so as to implement corresponding functions and effects. These are not enumerated in the present disclosure.

For beneficial technical effects corresponding to the exemplary embodiments of the present method, reference may be made to the corresponding beneficial technical effects in the section of exemplary circuit described above, and details are not described herein again.

### Exemplary electronic device

FIG. 14 is a block diagram of an electronic device according to an embodiment of the present disclosure. An electronic device 1400 includes one or more processors 1410 and a memory 1420.

The processor 1410 is a central processing unit (CPU) or another form of processing unit having a data processing capability and/or an instruction execution capability, and controls other components in the electronic device 1400 to implement desired functions.

The memory 1420 may include one or more computer program products, which may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 1410 may run the one or more program instructions to implement the method according to various embodiments of the present disclosure that are described above and/or other desired functions.

In an example, the electronic device 1400 may further include an input device 1430 and an output device 1440. These components are connected to each other through a bus system and/or another form of connection mechanism (not shown).

The input device 1430 may further include, for example, a keyboard and a mouse.

The output device 1440 may output various information to the outside, and may include, for example, a display, a speaker, a printer, a communication network, and a remote output device connected to the communication network.

Certainly, for simplicity, FIG. 14 shows only some of components in the electronic device 1400 that are related to the present disclosure, and components such as a bus and an input/output interface are omitted. In addition, according to specific application situations, the electronic device 1400 may further include any other appropriate components.

### Exemplary computer program product and computer readable storage medium

In addition to the foregoing method and device, embodiments of the present disclosure may also relate to a computer program product, which includes computer program instructions. When the instructions are run by a processor, the processor is enabled to perform the steps, of the method according to the embodiments of the present disclosure, that are described in the "Exemplary method" section of this specification.

The computer program product may be program code, written with one or any combination of a plurality of programming languages, that is configured to perform the operations in the embodiments of the present disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of the present disclosure further relates to a computer readable storage medium storing computer program instructions. When the computer program instructions are run by the processor, the processor is enabled to perform the steps, of the method according to the embodiments of the present disclosure, that are described in the "Exemplary method" section of this specification.

The computer readable storage medium may be one readable medium or any combination of a plurality of readable media. The readable medium may be a readable signal medium or a readable storage medium. The readable storage medium may include, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of the present disclosure are described above in combination with specific embodiments. However, advantages, superiorities, and effects mentioned in the present disclosure are merely examples but are not for limitation, and it cannot be considered that these advantages, superiorities, and effects are necessary for the embodiments of the present disclosure. Specific details described above are merely for examples and for ease of understanding, rather than limitations. The details described above do not limit that the present disclosure must be implemented by using the foregoing specific details.

A person skilled in the art may make various modifications and variations to the present disclosure without departing from the spirit and the scope of this application. In this way, if these modifications and variations of this application fall within the scope of the claims and equivalent technologies of the claims of the present disclosure, the present disclosure also intends to include these modifications and variations.

## Claims

1. A chip, **characterized in that** the chip comprises:
a first chip domain (1) and a second chip domain (3), wherein a functional safety level of the first chip domain (1) is higher than that of the second chip domain (3), and the first chip domain (1) is configured to generate a data access request for the second chip domain (3); and
an isolation circuit (5), wherein the isolation circuit (5) is configured to perform a memory access operation on a storage space of the second chip domain (3) based on the data access request, and return a request execution result of the data access request to the first chip domain (1) based on an actual feedback status of the second chip domain (3) for the memory access operation, so that the storage space of the second chip domain (3) is used as an extended storage space of the first chip domain (1).

2. The chip according to claim 1, wherein the isolation circuit (5) comprises a first isolation sub-circuit (51) and a second isolation sub-circuit (53), and the second isolation sub-circuit (53) comprises an isolation module (531), a first buffer (533), and a second buffer (535); and
that the isolation circuit (5) is configured to perform a memory access operation on a storage space of the second chip domain (3) based on the data access request, and return a request execution result of the data access request to the first chip domain (1) based on an actual feedback status of the second chip domain (3) for the memory access operation comprises:
the first isolation sub-circuit (51) is configured to cache target content into the first buffer (533) based on the data access request;
the isolation module (531) is configured to perform a memory access operation on a storage region of the storage space based on the target content in the first buffer (533); and in response to obtaining an actual memory access feedback of the second chip domain (3) for the memory access operation performed on the storage region, cache the actual memory access feedback into the second buffer (535); and
the first isolation sub-circuit (51) is configured to determine, based on a cache status of the second buffer (535) for the actual memory access feedback, an actual feedback status of the second chip domain (3) for the access operation performed on the storage region; and return the request execution result of the data access request to the first chip domain (1) based on the actual feedback status corresponding to the storage region.

3. The chip according to claim 2, wherein the first isolation sub-circuit (51) comprises a detection module (511) and a result return module (513); and
that the first isolation sub-circuit (51) is configured to return the request execution result of the data access request to the first chip domain (1) based on the actual feedback status corresponding to the storage region comprises:
the detection module (511) is configured to determine a first functional safety detection result of the second chip domain (3) based on the actual feedback status corresponding to the storage region; and
the result return module (513) is configured to return the request execution result of the data access request to the first chip domain (1) based on the first functional safety detection result.

4. The chip according to claim 3, wherein there are at least two second isolation sub-circuits (53), and at least two isolation modules (531) in the at least two second isolation sub-circuits (53) correspond to at least two storage regions; and
that the detection module (511) is configured to determine a first functional safety detection result of the second chip domain (3) based on the actual feedback status corresponding to the storage region comprises:
the detection module (511) is configured to, in response to that at least two actual feedback statuses corresponding to the at least two storage regions each indicate that the second chip domain (3) has already returned the actual memory access feedback, determine a first matching degree between at least two actual memory access feedbacks corresponding to the at least two actual feedback statuses; and determine the first functional safety detection result of the second chip domain (3) based on the first matching degree.

5. The chip according to claim 4, wherein the first isolation sub-circuit (51) further comprises a first reading module (515) and a first counter (517);
the first counter (517) is configured to record first numbers of the actual memory access feedbacks that are respectively cached in at least two second buffers (535) in the at least two second isolation sub-circuits (53); and
before the first matching degree between the at least two actual memory access feedbacks corresponding to the at least two actual feedback statuses is determined by the detection module (511), the first reading module (515) is configured to perform data reading respectively on the at least two second buffers (535) in response to determining, based on the first numbers of the actual memory access feedbacks that are respectively cached in the at least two second buffers (535), that the at least two second buffers (535) each meet a preset reading condition, to obtain the at least two actual memory access feedbacks respectively corresponding to the at least two actual feedback statuses.

6. The chip according to claim 3, wherein
the detection module (511) is further configured to start executing a timing operation in response to the first isolation sub-circuit (51) obtaining the data access request; and
that the detection module (511) is configured to determine a first functional safety detection result of the second chip domain (3) based on the actual feedback status corresponding to the storage region comprises:
the detection module (511) is configured to determine a second matching degree between the actual feedback status corresponding to the storage region and an expected feedback status; and determine the first functional safety detection result of the second chip domain (3) based on the second matching degree, wherein
the expected feedback status indicates that the second chip domain (3) has already returned the actual memory access feedback before duration of the timing operation reaches preset duration.

7. The chip according to claim 3, wherein that the result return module (513) is configured to return the request execution result of the data access request to the first chip domain (1) based on the first functional safety detection result comprises:
the result return module (513) is configured to, in response to the first functional safety detection result indicating that there is no functional safety exception in the second chip domain (3), determine a target actual memory access feedback based on the actual feedback status corresponding to the storage region, and return the target actual memory access feedback as the request execution result of the data access request to the first chip domain (1);
or
the result return module (513) is configured to, in response to the first functional safety detection result indicating that there is a functional safety exception in the second chip domain (3), generate a simulated memory access feedback corresponding to the data access request, and return the simulated memory access feedback as the request execution result of the data access request to the first chip domain (1).

8. The chip according to claim 2, wherein the first isolation sub-circuit (51) is further configured to determine a first functional safety detection result of the second chip domain (3) based on the actual feedback status corresponding to the storage region; and perform a first target exception handling operation in response to the first functional safety detection result indicating that there is a functional safety exception in the second chip domain (3).

9. The chip according to claim 8, wherein
that the first isolation sub-circuit (51) is configured to perform a first target exception handling operation comprises:
the first isolation sub-circuit (51) is configured to send a first interrupt signal to the first chip domain (1), so that the first chip domain (1) controls reset of the second chip domain (3), the isolation module (531), the first buffer (533), and the second buffer (535) in response to obtaining the first interrupt signal;
and/or
that the first isolation sub-circuit (51) is configured to perform a first target exception handling operation comprises:
the first isolation sub-circuit (51) is configured to disconnect a communication link between the first isolation sub-circuit (51) and the first buffer (533), and disconnect a communication link between the first isolation sub-circuit (51) and the second buffer (535).

10. The chip according to claim 2, wherein the isolation module (531) comprises a second reading module (5311) and a second counter (5313);
the second counter (5313) is configured to record a second number of the target content cached in the first buffer (533); and
before the memory access operation is performed by the isolation module (531) on a storage region of the storage space based on the target content in the first buffer (533), the second reading module (5311) is configured to perform data reading on the first buffer (533) in response to determining, based on the second number of the target content cached in the first buffer (533), that the first buffer (533) meets a preset reading condition, to obtain the target content in the first buffer (533).

11. The chip according to claim 1, wherein the isolation circuit (5) is further configured to perform a first target exception handling operation in response to obtaining an actual memory access feedback from the second chip domain (3) and the actual memory access feedback and the data access request meeting a preset uncorrelated condition.

12. The chip according to claim 1, wherein the isolation circuit (5) is further configured to record a third number of data access requests in execution; determine a numerical relationship between the third number of the data access requests in execution and a preset number; determine a second functional safety detection result of the first chip domain (1) based on the numerical relationship; and perform a second target exception handling operation in response to the second functional safety detection result indicating that there is a functional safety exception in the first chip domain (1).

13. The chip according to claim 12, wherein that the isolation circuit (5) is configured to perform a second target exception handling operation comprises:
the isolation circuit (5) is configured to send a second interrupt signal to the first chip domain (1), so that the first chip domain (1) performs a reset operation in response to obtaining the second interrupt signal.

14. A chip-based data access method, wherein the chip comprises a first chip domain, a second chip domain, and an isolation circuit, and a functional safety level of the first chip domain is higher than that of the second chip domain; and
the data access method comprises:
generating (410) a data access request for the second chip domain through the first chip domain; and
performing (420) the following operations by the isolation circuit, so that a storage space of the second chip domain is used as an extended storage space of the first chip domain: performing a memory access operation on the storage space of the second chip domain based on the data access request, and returning a request execution result of the data access request to the first chip domain based on an actual feedback status of the second chip domain for the memory access operation.

15. A computer readable storage medium, wherein the storage medium stores a computer program that, when executed by a processor, causes the processor to implement the method according to claim 14.

16. An electronic device, **characterized in that** the electronic device comprises:
a processor; and
a memory, configured to store processor-executable instructions, wherein
the processor is configured to read the executable instructions from the memory, and execute the instructions to implement the method according to claim 14.
